# EUROPÄISCHE PATENTANMELDUNG

(11) **EP 1 837 822 A1**
(43) Veröffentlichungstag der Anmeldung: **26.09.2007**
(21) Anmeldenummer: 06111567.1
(22) Anmeldetag: 22.03.2006
(51) Int. Cl.: G06Q 30/00

(54) **Verfahren und Vorrichtung, um das Verhalten eines Teilnehmers eines Telekommunikationsnetzes zu belohnen**

(71) Anmelder: SWISSCOM MOBILE AG, 3050 Bern (CH)
(72) Erfinder: Diener-Kimmich, Lars, 3123, Belp (CH)
(74) Vertreter: P&TS Patents & Technology Surveys SA

(57) **Zusammenfassung**

Es ist ein Verfahren, um das Verhalten eines Teilnehmers eines Telekommunikationsnetzes (2) zu belohnen, mit folgenden Schritten offenbart: eswird geprüft, ob das Verhalten des Teilnehmers in nerhalb einesZeitabschnitts(A2) in der Vergangenheit, der biszum aktuellen Prüfzeitpunkt (t3) reicht, vorbestimmte Kriterien für eine Belohnung erfüllt. Sobald benannte Kriterien erfüllt sind, wird der benannte Teilnehmer durch eine Ermässigung auf eine Dienstleistung im benannten Telekommunikationsnetz automatisch und sofort belohnt. Der benannte Teilnehmer wird durch dassofortige Senden einer Meldung informiert. In einer Ausführungsform wird der Teilnehmer mit einer freien Periode, wenn die Anzahl SMS, die innerhalb einer Stunde gesendet wurden, höher als eine vorbestimmte Schwelle ist.

## Beschreibung

### Technisches Gebiet

Die Erfindung bezieht sich auf ein Verfahren, um das Verhalten eines Teilnehmers eines Telekommunikationsnetzes mit geldwerten Vorteilen zu belohnen, sowie eine Vorrichtung zur Ausführung des Verfahrens.

### Darstellung der Erfindung

Bekannt sind im Stand der Technik Treueprogramme, beispielsweise Treuepunkteprogramme, um Teilnehmer, die ein Telekommunikationsnetz intensiv benutzen, zu belohnen. Dabei werden oft Bonuspunkte bei jeder Beanspruchung des Netzes gesammelt. Die Punkte können zu einem späteren Zeitpunkt, zum Beispiel am Ende der Verrechnungsperiode oder wenn sie einen bestimmten Schwellenwert erreichen, eingelöst werden. En Nachteil von solchen Systemen ist, dassdie Belohnung erst viel später kommt, so dassder Teilnehmer die Beziehung zwischen jeder getätigten Aktion und der entsprechenden Belohnung nicht leicht nachvollziehen kann. Der Teilnehmer versteht nicht genau, mit welchen Aktionen er in der Vergangenheit Punkte verdient hat, und hat somit keinen Anreiz, Aktionen zu wiederholen.

Darüber hinausist das Verwalten der Bonuspunkte, die über eine längere Zeitperiode, möglicherweise über Monate oder Jahre hinweg, für Kleinbenutzer addiert, abgelegt und verwaltet werden müssen, verwaltungsmässig aufwendig und technisch kompliziert.

Bekannte Treueprogramme haben ausserdem den Nachteil, dass eine Reaktion vom Teilnehmer benötigt wird, damit er von der Belohnung profitieren kann. Zum Beispiel verlangen gewisse Treueprogramme, dass sich der Teilnehmer mit dem Netzbetreiber in Verbindung setzt, um im Treueprogramm angemeldet zu sein oder um seine erworbenen Punkte einzulösen. Diesist sowohl für den Teilnehmer alsauch für den Netzbetreiber zeitaufwendig und teuer.

Essind ausserdem verschiedene Treueprogramme bekannt, bei welchen das Verhalten eines Teilnehmerswährend fest definierten Verrechnungsperioden belohnt wird, wenn diesesVerhalten gewisse Kriterien erfüllt. Zum Beispiel wird automatisch ein Rabatt auf die monatliche Telekommunikationsrechnung offeriert, wenn der verrechnete Betrag eine vorbestimmte Schwelle erreicht. Auch in diesem Fall kommt die Belohnung erst Tage oder sogar Wochen nach dem auslösenden Ereignis. Eine Telefonverbindung am Anfang von Januar wird zum Beispiel frühestens mit der Januarrechnung, die im Februar erstellt wird, belohnt.

GB-A-2 367 445 beschreibt ein Verfahren, bei welchem ein Teilnehmer durch freie Anrufe belohnt wird, wenn die Benutzung des Mobilfunknetzeswährend einer vorherigen Rechnungsperiode höher als eine vorbestimmte Schwelle war. Auch in diesem Fall erfolgt die Belohnung erst am Ende von vorbestimmten und längeren Verrechnungsperioden.

US-B1-6,298, 125 beschreibt ein Verfahren, bei welchem Ermässigungen auf den Kosten einesAnrufsauf dem früheren Verhalten des Mobilteilnehmersbasieren. Mobilteilnehmer werden aber nicht informiert, dass sie jetzt ein Recht auf vergünstigte Anrufe haben; dieses Recht wird nur im Nachhinein festgestellt.

US-A1-2004/0097245 beschreibt ein anderesTreueprogramm für Mobilteilnehmer, dasein Data-Mining verwendet, um zu bestimmen, welche Teilnehmer und welche Verhalten belohnt werden sollen. Das System ist technisch sehr komplex und verlangt eine grosse Rechenleistung. Die Belohnungsregeln sind so komplex, dassder Teilnehmer kaum erraten kann, welches Verhalten der Netzbetreiber fordern wird.

WO-A2-01/89190 beschreibt ein anderes Belohnungsverfahren für treue Benutzer eines Mobilfunknetzes. Dieses System basiert auf Treuepunkten und weist ebenfallsalle angegebenen Mängel auf.

Andere Treupunkteprogrammswurden auch in US-A1-2004/0110486, USA-6,049,599 und in DE-A1-103 25 409 beschrieben.

US-A1-2005/0033691 beschreibt ein Verfahren, um einen Mobilteilnehmer automatisch vom günstigsten Preisplan profitieren zu lassen. Ziel dieses System ist die Auswahl desgeeigneten Preisplanszu vereinfachen: es fordert jedoch kaum bestimmte Verhalten der Benutzer.

Ähnliche Lösungen zur Auswahl einesgeeigneten Preisplans wurden auch in US-A1-2004/0235451, US-A1-2005/0037731 und US-B1-6,597,903 beschrieben.

EP-A2-0 809 387 beschreibt ein Verfahren, um den Preisjedes Anrufsautomatisch, individuell und benutzerabhängig festzulegen. Dies hat den Vorteil, dassder Preis etwa an die momentan verfügbare Bandbreite angepasst wird, fördert jedoch nicht kaum den Verkehr.

US-A1-2004/0176067 beschreibt ein Verfahren, um SM Sin Abhängigkeit von verschiedenen Kriterien, einschliesslich vom Inhalt des SMS, zu verrechnen.

US-A1-2004/0205031 beschreibt eine Preisstruktur mit einem festen Grundpreisund einem negativen Preispro Benutzung, um etwa das aktive Probieren eines neuen Systems zu fordern.

### Darstellung der Erfindung

Esist ein Ziel der Erfindung, ein neues Verfahren und eine entsprechende Vorrichtung zu schaffen, um das Verhalten eines Teilnehmerseines Telekommunikationsnetzes mit geldwerten Vorteilen zu belohnen, die die genannten Nachteile vermeiden.

Esist insbesondere ein Ziel der Erfindung, ein Treueprogramm anzubieten, dastechnisch einfacher als bekannte Systeme ist, und das keine langfristige Speicherung von Ereignissen verlangt, und keine Abfragen von älteren Records in Verrechnungsdatenbanken.

Esist ein weiteres Ziel der Erfindung, ein Treueprogramm anzubieten, bei welchem das Verhalten eines Teilnehmersohne Verzögerung belohnt werden kann, ohne auf das Ende einer Verrechnungsperiode warten zu müssen.

Diese Ziele werden insbesondere durch ein Verfahren mit den Merkmalen des Anspruchs 1 und durch eine Vorrichtung mit den Merkmalen des Anspruchs 19 gelöst.

Vorteilhafte Ausführungsformen sind in den Unteransprüchen angegeben.

### Kurze Beschreibung der Figuren

Die Erfindung wird anhand der beigefügten Figuren näher erläutert, wobei
- **Fig. 1**: schematisch ein Telekommunikationsnetzwerk mit einem Verrechnungsserver gemässder Erfindung zeigt,
- **Fig. 2**: ein Chronogramm des Verhaltens eines Teilnehmers in der Zeit illustriert,
- **Fig. 3**: den zu verrechnenden Betrag zeigt, der durch die Zeit durch das Verhalten entsprechend der Fig. 2 verursacht wird, und
- **Fig. 4**: eine mögliche Ausführungsvariante einer Schaltung zur Prüfung darstellt, ob Kriterien für eine Belohnung erfüllt sind.

### Wege zur Ausführung der Erfindung

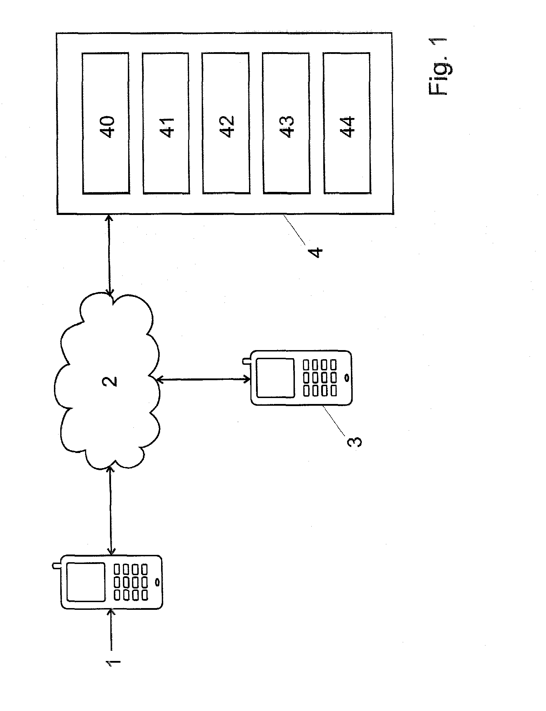

Figur 1 zeigt ein Telekommunikationsnetz 2, zum Beispiel ein Mobilfunknetz, ein Fixnetz oder ein WLAN-Netz, an welches mehrere Mobilgeräte 1, 3, zum Beispiel Mobiltelefone, PDAs, Laptops, usw. angeschlossen sind. DasTelekommunikationsnetz 2 wird von einem Netzbetreiber betrieben, der den Zugang zum Netz 2 anhand einer Verrechnungsplattform 4 an den Teilnehmer verrechnet. Unterschiedliche Verrechnungsverfahren können für unterschiedliche Teilnehmer verwendet werden. Das Netz 2 kann beispielsweise sowohl Prepaid als Postpaid-Teilnehmer haben. Das Netz 2 kann auch aus mehreren beispielsweise über Roamingsabkommen verbundenen Unternetzen bestehen, die möglicherweise auch unterschiedlichen Technologie verwenden können.

Die Verrechnungsplattform 4 besteht aus Hardware- und/oder Soft waremitteln, beispielsweise auseinem Verrechnungsserver oder Verrechnungszentrum, die vom Netzbetreiber betrieben werden. Zweck der Verrechnungsplattform ist vor allem, den Zugang zum Netz und die Beanspruchung von Dienstleistungen, wie zum Beispiel Sprach- oder Datenverbindungen, Textmeldungen, Mehrwertdienste, usw. zu verrechnen. In einem GSM-Netz werden beispielsweise mindestensgewisse von diesen Dienstleistungen anhand von so genannten, an sich bekannten CDRs (Call Detail Records), die im Netz generiert und an die Verrechnungsplattform 4 gesendet werden, verrechnet.

In der dargestellten Ausführungsform der Verrechnungsplattform 4 sind ausser bereits bei konventionellen Plattformen anwesenden Mitteln gewisse neue Hardware- und/oder Software Komponenten vorhanden, um das später näher beschriebene Verrechnungsverfahren einzusetzen. Solche neue Komponenten können auch in einem separaten Server eingebaut werden. Im dargestellten Beispiel werden benutzerspezifische Zeitzähler 40 vorgesehen, um die Dauer von Zeitabschnitten ab gewissen Aktionen der Teilnehmer zu messen. En Logikmodul 41 prüft, ob ein oder mehrere Teilnehmer gewisse Kriterien für eine Belohnung erfüllen. En Informationsmodul 42 erzeugt Meldungen, zum Beispiel Textmeldungen wie SMS, USSD oder vorzugsweise Flash SMS, um Teilnehmer unmittelbar darüber zu informieren, wenn sie belohnt werden. Die Benachrichtigung kann auch über den Sprachkanal erfolgen, beispielsweise alsspeziellesTonsignal beim Abheben des Hörersoder als synthetische Stimme. Die Verrechnung selbst erfolgt anhand des Verrechnungsmoduls 43, dasein Konto auf einer Prepaid-Karte der Teilnehmer belastet und/oder monatliche Rechnungen auf Basisder gesammelten CDRsoder andere Verrechnungseinheiten erstellt. Ein zweiter Zähler 44 kann vorgesehen werden, um die Anzahl der vom Teilnehmer ausgelösten Ereignisse, die für eine Belohnung dieses Teilnehmers relevant sind, im Zeitabschnitt zu ermitteln.

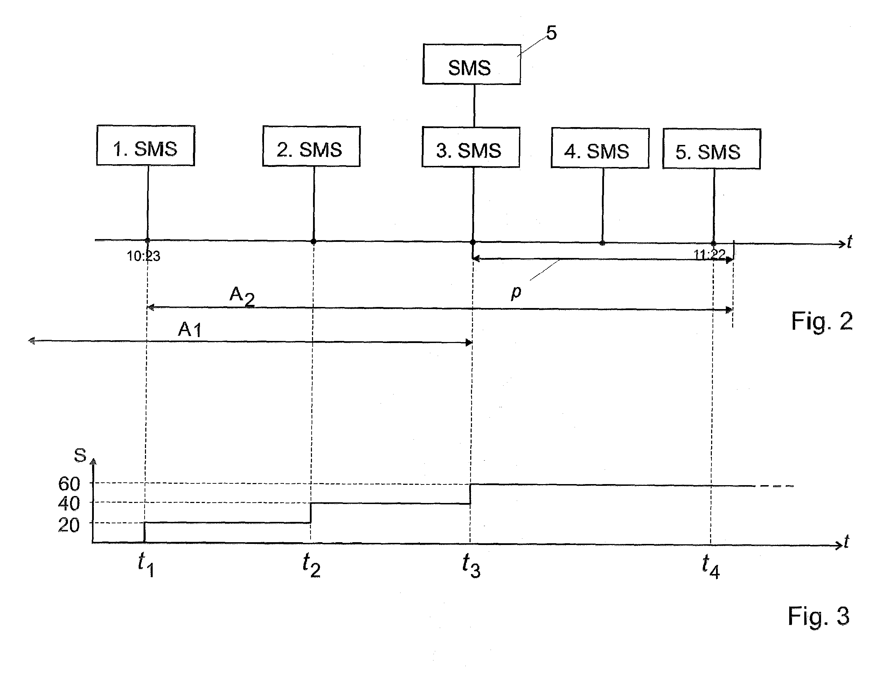

Die Figuren 2 und 3 zeigen ein Beispiel eines Verhaltens eines Mobilteilnehmers im Laufe der Zeit, und die Art und Weise wie dieses Verhalten vom Netzbetreiber geprüft und belohnt wird. Zum Zeitpunkt t1 (in diesem Beispiel 10:23 h) sendet ein bestimmter Teilnehmer eine erste Meldung, zum Beispiel eine SMS, eine MMS oder eine andere kostenpflichtige Text- oder Datenmeldung. Dem Kunden wird diese erste SM Sin diesem Beispiel mit 20 Rappen verrechnet, wie auf dem Diagramm der Figur 3 ersichtlich. Dieser Betrag kann entweder sofort von einem Prepaid-Konto des Teilnehmers belastet werden, oder erst am Ende der Verrechnungsperiode, zum Beispiel durch eine monatliche Rechnung.

Das Senden dieser ersten Meldung startet einen benutzerspezifischer Zeitzähler 40, der die Dauer eines bestimmten ZeitabschnittsA2, zum Beispiel eine Stunde, ab t1 zählt. Der zweite Zähler 44, der in diesem Beispiel die Anzahl der von Teilnehmer gesendeten Meldungen während dem benannten Zeitabschnitt A2 zählt, wird auch durch diese Aktion auf Null zurückgestellt und auf den Wert 1 erhöht. In einer Variante werden dabei die Anzahl der Meldungen oder auslösenden Aktionen im Zeitabschnitt gezählt. In einer zweiten Variante werden stattdessen die Kosten S, die von der auslösenden, vom Betreiber belohnten Aktionen während dem Zeitabschnitt A2 gezählt. Eskönnen zusätzlich oder stattdessen andere Aktionen des Teilnehmers als Kriterien für eine Belohnung verwendet werden, zum Beispiel die Summe der verursachten Telekommunikationsgebühr während fliessenden Zeitabschnitten mit Dauer A2, oder Zugriffe auf vom Betreiber angeforderten Dienste wie etwa Fernsehen auf dem Mobilgerät, Zugriffe auf WLAN-Netze, spezielle Mehrwertdienste, usw.

Zum Zeit t2 sendet derselbe Teilnehmer eine zweite Meldung. Da in diesem Beispiel die Dauer zwischen t2 und t1 kürzer alsder vorbestimmte Zeitabschnitt A2 ist, löst diese zweite Aktion nur ein erhöhen des benannten zweiten Zählers 44, der jetzt den Wert 2 erreicht, oder falls Beträge gezählt werden 40 Rappen. Der Zeitzähler 40 zählt den Ablauf der Zeit ungehindert weiter.

Zum Zeit t3 sendet der Teilnehmer seine dritte Meldung während dem Zeitabschnitt A2. In diesem Beispiel erfüllt das Senden von n SMSim Zeitabschnitt, zum Beispiel drei SMSin einer Stunde, die festgelegten Kriterien für eine Belohnung. Das Erfüllen desoder der Kriterien wird automatisch und unmittelbar von Modul 41 im Verrechnungszentrum wahrgenommen, das das Senden einer Meldung 5 an den Teilnehmer über das Modul 42 auslöst. Die Meldung 5 ist beispielsweise eine Flash-Meldung, die sofort, ohne auf das Ende der Verrechnungsperiode zu warten, an den Teilnehmer gesendet wird, um ihn über seine grade gewonnene Belohnung zu informieren. In diesem Fall könnte die Textmeldung 5 beispielsweise folgenden Inhalt enthalten:
*" Geniessen Sie einen Liberty-Moment! Alle weiteren SM San Inland Telefon-Nummern sind für Sie bis heute 11:22 Uhr gratis."*

In einem Beispiel besteht die Belohnung auseinem Zeitabschnitt p, während welchem der Teilnehmer weitere Meldungen kostenlossenden darf und/oder andere Aktionen im Netz durchführen darf. Der Teilnehmer nimmt dasAngebot dankend an und sendet eine 4. und eine 5. SMS innerhalb des Zeitabschnitts p. Ausder Figur 3 wird sichtbar, dassdem Teilnehmer keine weiteren Gebühren für das Senden der 4. und 5 SMS anfallen. Vielmehr bleibt der Gebührenstand bei 60 Rappen stehen.

Andere geldwerten Belohnungen sind denkbar, so beispielsweise eine Ermässigung auf weitere Meldungen im Zeitabschnitt p, dassofortige Gutheissen eines Betragsauf ein prepaid-Konto des Teilnehmers oder eine Ermässigung auf der monatlichen Rechnung, über welche der Teilnehmer unmittelbar informiert wird. Die Belohnung könnte auch auseiner bestimmten Anzahl freier SMSoder Meldungen bestehen.

Der Zeitabschnitt p läuft im dargestellten Beispiel biszum Ende desZeitabschnittsA2 (Zeitpunkt t4). Die Länge des Abschnitts hängt somit von der Zeit ab, die vom Teilnehmer benötigt wurde, um die benannten Kriterien zu erfüllen. Das Ende der freien Periode wird vom Zeitpunkt der ersten Aktion, zum Beispiel dem Senden der ersten SMS, und der vorher definierten Länge desZeitabschnittsA2 bestimmt.

Es ist jedoch auch denkbar, eine freie Periode fester Dauer ab dem Zeitpunkt t3, an welchem die Kriterien erfüllt sind, vorzusehen. Ebenso könnte die Belohnung, beispielsweise die Dauer der freien Periode p, vom Verhalten des Teilnehmersabhängig sein, zum Beispiel vom Typ der gesendeten Meldungen im Zeitabschnitt, von den Kosten Sim Zeitabschnitt, von anderen Aktionen des Teilnehmers, und/oder vom Typ der Subskription des Teilnehmers.

Ausserdem können Meldungen, zum Beispiel SMS, die gleichzeitig an mehrere B-Teilnehmer gesendet werden, oder die eine doppelte Länge haben, oder die in ein fremdes Netz gesendet werden, anders bewertet werden.

In diesem Beispiel wird der Teilnehmer erst über die Belohnung informiert, wenn die Kriterien bereits erfüllt sind. Esist jedoch auch möglich, den Teilnehmer beispielsweise durch eine Meldung schon im Vorausdarüber zu informieren, dassdie Kriterien für eine Belohnung fast erfüllt sind. Zum Beispiel könnte eine Flash-Meldung zwischen den Zeitpunkten t2 und t3 an den Teilnehmer gesendet werden, um ihn zu veranlassen, eine weitere SMSzu schicken, damit die Kriterien für eine gebührenfreie Periode bist4 erfüllt sind:
*"Sparen Sie durch das Senden von SMS! Senden Sie jetzt eine weitere SMS an einen Ihrer Freunde und alle weiteren SMS sind für Sie bis heute 11:22 Uhr gratis."*

Diese frühere automatisch generierte Meldung könnte beispielsweise die Aktionen (beispielsweise die Anzahl zusätzlichen SMS) angeben, die für eine Belohnung notwendig sind, sowie die Belohnung selbst (zum Beispiel der Zeitpunkt t4, biswelcher die Dienstleistung frei verwendet werden kann).

Esist vorteilhaft im erfindungsgemässen Verfahren, wenn die Dauer desZeitabschnittsA2 kurz ausgewählt wird, vorzugsweise weniger alsein Tag, zum Beispiel eine Stunde. Dieserlaubt eine nahezu unmittelbare Belohnung des Teilnehmerverhaltens, der somit besser nachvollziehen kann, warum genau er belohnt wurde. Diesvereinfacht auch das System, das nicht alle Aktionen oder CDRsdesTeilnehmers während ganzer Verrechnungsperioden auswerten muss, um über eine mögliche Belohnung zu entscheiden.

Statt wie im dargestellten Beispiel nur individuelle Verhalten zu belohnen, kann im Rahmen der Erfindung auch das Verhalten von Gruppen von Teilnehmern während fliessenden Zeitabschnitten (A2) geprüft und ggf. belohnt werden. Eine Gruppe kann beispielsweise aus folgenden Teilnehmern bestehen:
■ Teilnehmer, die sich während einem gewissen Zeitabschnitt am selben automatisch ermittelten Standort befinden, zum Beispiel an einem Openair-Konzert, ein DJ Battle, ein kulturellesoder sportliches Event, im Flughafen, im selben Zug, usw.
■ Teilnehmer, die ein Ticket für ein gemeinsames Event erworben haben.
■ Familie-, Vereins- oder Firmenmitglieder.
■ Ad-hoc Gruppen, die sich beispielsweise alssolche über eine Internet Seite registriert haben
■ usw.

In diesem Fall wird beispielsweise die gesamte Anzahl von SMS, die von allen Gruppenmitgliedern während sukzessiven Zeitabschnitten gesendet werden, geprüft, um dann alle Mitglieder zu belohnen, zum Beispiel mit freien Perioden, wenn diese Anzahl eine Schwelle erreicht. Andere Kriterien und andere Belohnungen sind genauso wie bei Belohnung von individuellen Teilnehmern denkbar. Esist auch möglich, unterschiedliche Teilnehmer in der Gruppe unterschiedlich zu belohnen, zum Beispiel in Abhängigkeit von angegebenen Teilnehmerpräferenzen, vom Gerättyp, oder mit freien Perioden, die an unterschiedlichen Zeitpunkten starten. Esist auch möglich, die Teilnehmer einer Gruppe etwa während einem kulturellen Ereignisüber die übrige Zeit biszur Ende der freien Periode, oder über die Anzahl SMS, die für eine Belohnung noch fehlen, über Anzeigepanelszu informieren.

Die vorliegende Erfindung wird vorzugsweise anhand eines speziellen Servers oder einer speziellen Softwareanwendung realisiert, die kontinuierlich oder bei jeder neuen SMS oder Aktion jedes Teilnehmers prüft, ob Kriterien für eine Belohnung des Teilnehmers oder der Gruppe zu welcher der Teilnehmer gehört, erfüllt sind. Falls diese Kriterien erfüllt sind, wird sofort der Verrechnungsserver des Netzbetreibers elektronisch informiert, damit er sein Verhalten anpasst und den Teilnehmer oder die Gruppe von der Belohnung profitieren lässt.

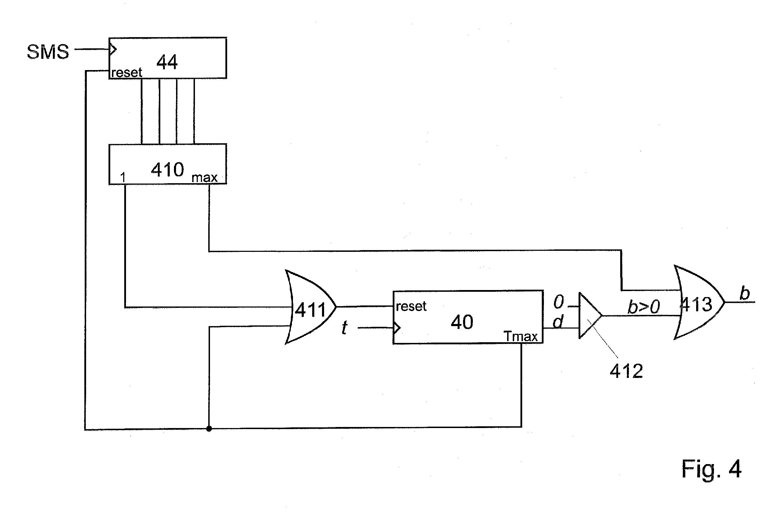

Daserfindungsgemässe Verfahren hat auch den Vorteil, dassdie Kriterien zur Belohnung eines individuellen Teilnehmers oder einer Gruppe von Teilnehmern auch anhand der einfachen Schaltung, die in der Figur 4 dargestellt ist, geprüft werden können. Dabei wird im Prinzip eine Schaltung pro Teilnehmer benötigt. Esist auch denkbar, nur eine Schaltung pro Teilnehmer vorzusehen, der vor kurzem SMS gesendet hat, d.h. eswird jedes Mal, wenn eine SMS von einem Teilnehmer gesendet wird, eine Schaltung zugeordnet.

Die Schaltung umfasst einen Zähler 44, der jedes Mal wenn eine neue Aktion des Teilnehmers, zum Beispiel eine neue SMS, festgestellt wird erhöht wird. In einer anderen Ausführungsform könnte der Zähler 44 auch die von den geforderten Aktionen desTeilnehmerswährend des Zeitabschnittsverursachten Kosten zählen. Die Ausgänge desZählers44 werden mit der logischen Einheit 410 (als Teil des Logikmoduls 41) verbunden. Die Einheit 410 liefert ein erstes Signal "1" bei der ersten SMS oder Aktion (am Zeitpunkt t1) und ein zweites Signal "max", wenn die Anzahl SM Seine vorbestimmte Schwelle erreicht hat (t3).

En zweiter Zähler 40 zählt die Zeit während dem Zeitabschnitt A2. Dieser Zähler wird zurückgestellt, wenn einesder folgenden Signale aktiv ist: "1" , oder "tmax" , das heisst bei der ersten SMS oder am Ende des Zeitabschnitts A2. Je nach Belohnung ist auch eine Zurückstellung bei der n-ten SMS, d.h. am Zeitpunkt t3, möglich. Diese "oder" Bedingung wird anhand des logischen Gates 411 am Eingang des Reset-Eingangs des Zeitzählers fest gestellt.

Der Zeitzähler 40 liefert am Ausgang ein Signal d, dasdie Zeit innerhalb desZeitabschnittsA2 angibt, sowie das bereitserwähnte Signal tmax, sobald diese Zeit am Ende vom Abschnitt A2 eine vorbestimmte Schwelle erreicht hat. Am tmax werden beide Zähler 40 und 44 zurückgestellt.

En Vergleichsmodul 412, als Teil des Logikmoduls41, vergleicht das Signal d am Ausgang vom Zähler 40 mit dem Wert Null und liefert ein aktives Signal d > 0, wenn d ungleich null ist, dasheisst während dem Zeitabschnitt A2. Das Signal d > 0 wird mit dem Signal "max" am Eingang der "UND" Schaltung 413 geführt, die ein aktives Signal b liefert, wenn beide Bedingungen erfüllt sind, das heisst wenn die Anzahl Meldungen die vom Zähler 44 während einem Zeitabschnitt A2 gleich oder grösser alsdie vorbestimmte Schwelle max ist. Dieses Signal wird an den Verrechnungsserver geleitet, um eine Belohnung auszulösen. Eine Meldung wird auch automatisch vom Modul 42 erstellt sobald b aktiv ist.

Diese Variante hat den Nachteil, dasseine Schaltung für jeden Teilnehmer und für jede Gruppe notwendig ist. Dieselben Funktionalitäten können aber auch mit einem Programmteil angeboten werden, die von einem gemeinsamen Mikroprozessor durchgeführt wird, um das Signal b für mehrere Teilnehmer und Gruppen zu ermitteln.

In einer anderen Variante werden keine Hardware- oder Softwarezähler 40, 44 verwendet, die die Zeit und die Anzahl Meldungen kontinuierlich zählen. Stattdessen werden alle Aktionen der Teilnehmer in einer Datenbank, zum Beispiel als CDR im Verrechnungsserver, registriert. Bei jeder neuen Aktion jedes Teilnehmers, zum Beispiel jede Meldung oder andere geforderte Aktionen, wird diese Datenbank von einem speziellen Softwaremodul abgefragt, um zu prüfen, ob die vorbestimmten Kriterien für eine Belohnung erfüllt sind. Esbrauchen jedoch nur die ganz neuen CDRs oder Aktionen der Teilnehmer, die innerhalb der letzten Zeitabschnitts A1, typischerweise innerhalb der letzten Stunde, abgefragt werden. Dieserlaubt eine sehr schnelle Feststellung des Rechts auf eine Belohnung, die nur wenige Rechenleistung verlangt.

Ebenso könnte das Prüfen der bestimmten Kriterien für eine Belohnung auch mindestens teilweise im Gerät des Teilnehmers erfolgen, um die benötigte Rechenleistung zu verteilen. Zu diesem Zweck kann ein speziellesSoftware-Teil, zum Beispiel ein Java-Applet, im Mobilgerät oder in einer Chipkarte im Mobilgerät, beispielsweise in der SM-Karte, installiert werden, um das Verhalten des Benutzers zu überwachen und das Erfüllen von vorbestimmten Kriterien zu entdecken. Diese Anwendung kann dann den Mobilteilnehmer über eine Meldung, zum Beispiel eine Dialogbox, informieren, wenn eine Belohnung verdient wurde oder wenn nur noch wenige Aktionen benötigt werden. Gleichzeitig wird auch eine Meldung, zum Beispiel alsspezieller CDR, an den Verrechnungsserver gesendet, damit die Belohnung aktiviert wird.

Die Erfindung bezieht sich auch auf ein Computerprogrammprodukt, welches eine Softwarecode enthält, welcher durch einen Prozessor auf einem Vorrichtung gemässAnspruch 19 abgespielt werden kann, um die Verfahrensschritte einesder Verfahren gemässeinem der Ansprüche 1 bis 18 durchzuführen.

## Patentansprüche

1. En Verfahren, um das Verhalten eines Teilnehmers eines Telekommunikationsnetzes (2), der mit einem mit dem Telekommunikationsnetzes (2) verbundenen Gerät (1) ausgestattet ist, zu belohnen, mit folgenden Schritten:
Prüfen, ob das Verhalten des Teilnehmersinnerhalb eines Zeitabschnitts (A2) in der Vergangenheit, der biszum aktuellen Prüfzeitpunkt (t3) reicht, vorbestimmte Kriterien für eine Belohnung erfüllt,
sobald benannte Kriterien erfüllt sind, Freischaltung einer Belohnung desbenannten Teilnehmersdurch eine Ermässigung auf Dienstleistungen im benannten Telekommunikationsnetzes, und
Senden einer Meldung an den benannten Teilnehmer, um ihn über die benannte Belohnung zu informieren.

2. Das Verfahren des Anspruchs 1, in welchem das benannte Prüfen in einem zentralen Server (4) im Telekommunikationsnetz (2) erfolgt.

3. Das Verfahren einesder Ansprüche 1 bis 2, in welchem das benannte Prüfen mindestensteilweise im Gerät (1) des Teilnehmers oder in einer Chipkarte im benannten Gerät (1) erfolgt.

4. Das Verfahren einesder Ansprüche 1 bis 3, bei welchem das benannte Prüfen bei Beanspruchungen desTelekommunikationsnetzes(2) durch das Gerät (1) oder bei der Sendung einer Meldung durch den Teilnehmer durchgeführt wird.

5. Das Verfahren einesder Ansprüche 1 bis 4, bei welchem jede Aktion des Teilnehmers, die für das Prüfen der benannten Kriterien relevant ist, zentral in einer benutzerspezifischen Ablagebereich, zum Beispiel ein Zähler (44) oder eine Datenbank, registriert wird,
wobei das Prüfen der benannten Kriterien den benannten Ablagebereich verwendet.

6. Das Verfahren des Anspruchs 5, bei welchem bei jeder Aktion des Teilnehmers, die für das Prüfen der benannten Kriterien relevant ist, CDRs in einer CDRs-Datenbank im benannten Zeitabschnitt (A1) geprüft werden.

7. Das Verfahren eines der Ansprüche 1 bis 6, bei welchem ein Verhalten des Teilnehmers das Starten eines teilnehmer spezifischen ersten Zählers (40) auslöst, um den benannten Zeitabschnitt (A2) zu zählen.

8. Das Verfahren des Anspruchs 7, bei welchem bei jeder Aktion des Teilnehmers im vom ersten Zähler (40) gezählten Zeitabschnitt geprüft wird, ob die benannten Kriterien erfüllt sind.

9. Das Verfahren eines der Ansprüche 1 bis 8, bei welchem die benannten Kriterien von der Anzahl Meldungen im benannten Zeitabschnitt (A2) abhängig sind.

10. Das Verfahren des Anspruchs 9, bei welchem eine Belohnung erteilt wird, wenn die Anzahl Meldungen, die vom Teilnehmer während dem benannten Zeitabschnitt (A2) gesendet wurden, höher als eine vorbestimmte Schwelle ist.

11. Das Verfahren eines der Ansprüche 1 bis 10, bei welchem die Ermässigung während des benannten Zeitabschnitts gültig ist.

12. Das Verfahren eines der Ansprüche 1 bis 11, bei welchem die Ermässigung während einem zweiten Zeitabschnitt, der ab Zeitpunkt des Erfüllensder Kriterien läuft, gültig ist.

13. Das Verfahren eines der Ansprüche 1 bis 12, bei welchem die benannte Meldung die übrige Dauer der Ermässigung angibt.

14. Das Verfahren eines der Ansprüche 1 bis 13, bei welchem bei jeder Sendung einer neuen Meldung vom Teilnehmer geprüft wird, ob die Anzahl Meldungen, die vom Teilnehmer im benannten letzten Zeitabschnitt gesendet wurden, höher als eine vorbestimmte Schwelle ist.

15. Das Verfahren eines der Ansprüche 1 bis 14, bei welchem die benannte Belohnung dasfreie Senden von Meldungen biszum Ende (t4) ei nes zweiten Zeitabschnitts ab dem ersten Ereignis(t1), das für die bestimmten Kriterien relevant ist, erlaubt.

16. Das Verfahren eines der Ansprüche 1 bis 15, bei welchem das Verhalten einer Gruppe von Teilnehmern geprüft und belohnt wird.

17. Das Verfahren des Anspruchs 16, bei welchem die benannte Gruppe ausfolgenden Teilnehmern besteht:
Teilnehmer, die sich zum selben Zeitpunkt am selben Ort befinden, und/oder
Teilnehmer, die an einem gemeinsamen Ereignis teilgenommen haben, und/oder
Mitglieder einer gemeinsamen Familie oder Firma.

18. Das Verfahren eines der Ansprüche 1 bis 17, bei welchem die Dauer des benannten Zeitabschnitts (A2) weniger als ein Tag beträgt.

19. Vorrichtung (4) zur Ausführung des Verfahrens eines der Ansprüche 1 bis 18, mit Mitteln zum Prüfen, ob das Verhaltens des Teilnehmers innerhalb eines Zeitabschnitts (A2) in der Vergangenheit, der biszum aktuellen Prüfzeitpunkt (t3) reicht, vorbestimmte Kriterien für eine Belohnung erfüllt,
sobald benannte Kriterien erfüllt sind, automatische Freischaltung einer Belohnung desbenannten Teilnehmers durch eine Ermässigung auf Dienstleistung im benannten Telekommunikationsnetzes (2),
Mittel, um eine Meldung an den benannten Teilnehmer zu senden, um ihn über die benannte Belohnung zu informieren.

20. Die Vorrichtung desAnspruchs 19, bei welcher die benannten Mittel einen Zeitzähler (40) zum Zählen der Zeit während des benannten Zeitabschnitts umfassen.

21. Die Vorrichtung eines der Ansprüche 19 bis20, bei welcher die benannten Mittel einen Zähler (40) zum Zählen der Anzahl Meldungen, die vom Teilnehmer während dem benannten Zeitabschnitt (A2) gesendet wurden, umfassen.

22. Die Vorrichtung eines der Ansprüche 19 bis21, bei welcher die benannte Mitteln Abfragemittel zum Abfragen einer Datenbank nach Aktionen des benannten Teilnehmers im benannten Zeitabschnitt (A1) sind.

23. Computerprogrammprodukt, welches eine Softwarecode enthält, welcher durch einen Prozessor auf einem Vorrichtung gemäss Anspruch 19 abgespielt werden kann, um die Verfahrensschritte einesder Verfahren gemässeinem der Ansprüche 1 bis 18 durchzuführen.
